# FASCICULE DE BREVET EUROPEEN

(11) **EP 0 443 935 B1**
(45) Date de publication et mention de la délivrance du brevet: **30.03.1994**
(21) Numéro de dépôt: 91400434.6
(22) Date de dépôt: 19.02.1991
(51) Int. Cl.: F16D 23/12, F16D 13/75

(54) **Dispositif de commande pour embrayage, notamment pour véhicule automobile**
Vorrichtung zur Betätigung einer Kupplung, insbesondere für ein Kraftfahrzeug
Clutch actuating system, especially for a motor vehicle

(30) Priorité: 23.02.1990 FR 9002247
(43) Date de publication de la demande: 28.08.1991
(73) Titulaire: VALEO, 75848 Paris Cédex 17 (FR)
(72) Inventeur: Lopez-Perez, Carlos, E-28005 Madrid (ES); Fernandez de Mera, José Felipe, Mostoles-Madrid (ES)
(74) Mandataire: Gamonal, Didier

(56) Documents cités:
- EP-A- 0 030 494
- EP-A- 0 067 099
- EP-A- 0 322 265
- FR-A- 1 587 732
- GB-A- 2 210 946
- US-A- 3 841 454
- US-A- 4 378 713

## Description

La présente invention concerne les dispositifs de commande pour embrayage, notamment pour véhicule automobile, selon le préambule de la revendication 1 et tel que décrit dans les documents FR-A-1 587 732 et EP-A-0 322 265.

La présente invention vise plus particulièrement le cas où tel qu'envisagé dans la demande de brevet français FR-A-2 653 388 déposée le 24 octobre 1989 sous le n° 89.13932, il comporte en outre, pour sa connexion à une timonerie de commande à la disposition de l'usager, une douille intermédiaire, qui, à l'une de ses extrémités, est en engagement téléscopique avec une pièce d'accouplement prévue à l'extrémité du câble de traction, avec, entre elle et cette pièce d'accouplement, des moyens de verrouillage débrayables, et qui, à l'autre de ses extrémités, est apte à être attelée à cette timonerie, et des moyens élastiques qui, prenant appui sur le support, sollicitent cette douille intermédiaire en direction de la pièce d'accouplement.

La présente invention a pour objet un dispostif de commande du genre concerné dans lequel il est avantageusement tiré un parti supplémentaire d'un tel engagement téléscopique à moyens de verrouillage débrayables entre cette douille intermédiaire et cette pièce d'accouplement.

Ce dispositif de commande est caractérisé en ce que, le câble de traction étant soumis à des moyens élastiques de précharge tendant à le maintenir sous tension, ces moyens élastiques de précharge interviennent entre le support et la pièce d'accouplement et sollicitent cette pièce d'accouplement en direction de la douille intermédiaire.

Ainsi, sous la sollicitation de ces moyens élastiques de précharge, la pièce d'accouplement du câble de traction s'engage de plus en plus profondément dans la douille intermédiaire assurant son attelage à la timonerie de commande au fur et à mesure de l'usure des garnitures de frottement que comporte l'embrayage desservi.

Autrement dit, il y a, suivant l'invention, une compensation automatique de cette usure au niveau même de l'attelage du câble de traction, sans qu'il soit nécessaire de prévoir par ailleurs à cet effet, et par exemple entre l'organe menant et l'organe mené, un quelconque autre dispositif de rattrapage.

Il en résulte avantageusement une simplification de l'ensemble.

Les caractéristiques et avantages de l'invention ressortiront d'ailleurs de la description qui va suivre, à titre d'exemple, en référence aux dessins schématiques annexés sur lesquels:
- la figure 1 est, suivant la ligne brisée I-I de la figure 2, une vue en coupe axiale d'un dispositif de commande suivant l'invention;
- la figure 2 en est, à échelle supérieure, une vue en coupe transversale passant par le câble de traction, pour la position de stockage;
- la figure 3 est une vue en coupe transversale reprenant pour partie celle de la figure 2, pour la position de service et de rattrapage d'usure;
- la figure 4 reprend, à échelle supériure, le détail de la figure 3 repéré par un encart IV sur cette figure 3;
- la figure 5 est une vue analogue à celle de la figure 4, pour la position de service et de traction.
- la figure 6 est une vue partielle analogue à la figure 1, pour un second exemple de réalisation.

Sur ces figures, on reconnaît un dispositif de commande 10 du type de celui faisant l'objet de la demande de brevet français N° 89.13932 considéré comme annexé au texte de la présente invention et auquel on pourra se rapporter.

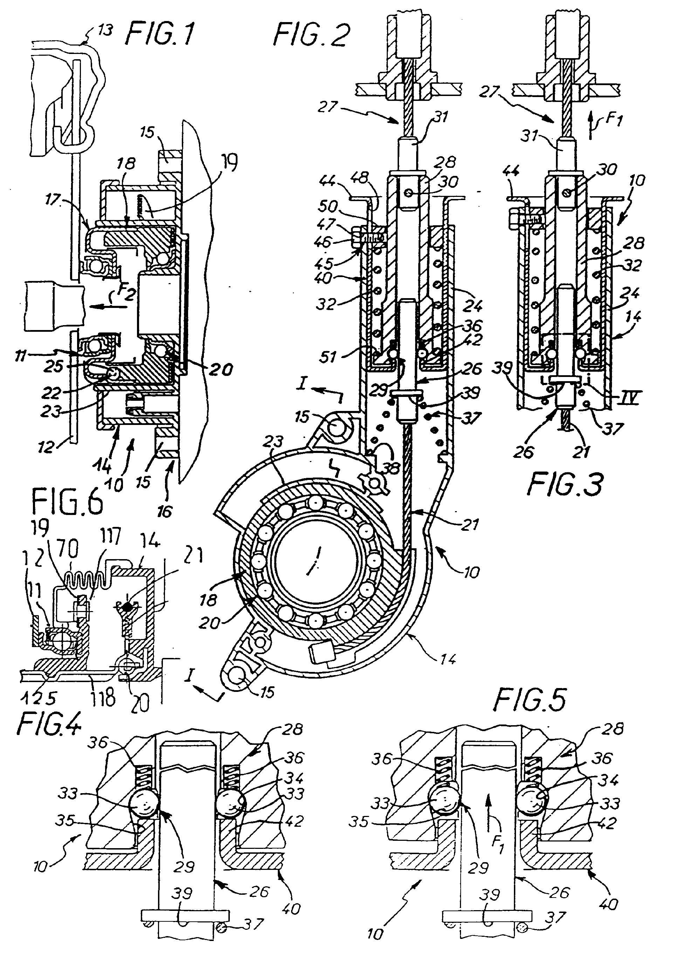

Il comporte (figure 1), globalement, pour la manoeuvre d'un organe de commande 11, ici une butée de débrayage à roulement, destiné à agir sur le dispositif débrayeur 12, ici les doigts d'un diaphragme ou en variante des leviers de débrayage, un embrayage 13, un support 14, qui est destiné à être rapporté, par des oreilles 15, sur une partie fixe 16, par exemple le carter de la boîte de vitesses associée, un organe mené 17, qui est monté mobile en translation par rapport au support 14 tout en étant fixe en rotation par rapport à celui-ci, ici par au moins une languette 19, et auquel est soumis l'organe de commande 11, et un organe menant 18 qui, lui, est monté mobile en rotation par rapport au support 14, par l'intermédiaire d'un roulement 20, tout en étant fixe en translation par rapport à ce support 14, et auquel est attelé circonférentiellement un câble de traction 21, avec, entre l'organe mené 17 et l'organe menant 18, des moyens de came à rampes hélicoïdales complémentaires 22.

Ici, l'organe mené 17 et l'organe menant 18 s'étendent coaxialement dans une partie annulaire 23 du support 14, le câble de traction 21 s'étend en direction d'une partie tubulaire 24, ici verticale, de ce support 14, saillante radialement, et radialement entre les rampes hélicoïdales, que les moyens de came 22 comportent sur l'organe mené 17 et sur l'organe menant 18, interviennent des billes 25.

On notera que l'organe menant 18 comporte un flasque (figure 2) avec une rainure pour le cable 14, dont l'extémité est dotée d'une butée comme un cable de frein de vélo, et que le support 14 est en forme de boîtier avec un fond doté des oreilles 15, et une couvercle de fermeture.

Le câble 21 est muni, à son extrémité, dans la partie tubulaire 24, d'une pièce d'accouplement 26 formée d'une tige épaulée, et le dispositif de commande 10 comporte, en outre, pour l'attelage de ce câble de traction 21 à une timonerie de commande 27 (ici reliée à la pédale de débrayage) à la disposition de l'usager, une douille intermédiaire 28, qui, à l'une de ses extrémités, est en engagement téléscopique avec la pièce d'accouplement 26, avec, entre elle et celle-ci, des moyens de verrouillage débrayables 29, et qui, à l'autre de ses extrémités, est apte à être attelée, par une goupille 30, à un embout 31 de la timonerie 27, et des moyens élastiques, ici un ressort de compression 32, qui, prenant appui sur le support 14, sollicitent cette douille intermédiaire 28 en direction de la pièce d'accouplement 26.

Ici, les moyens de verrouillage 29 comportent des billes 33, qui, disposées annulairement autour de la pièce d'accouplement 26, au contact de celle-ci, sont logées dans une gorge 34 de la douille 28 formant pour elles, en direction de ladite pièce 26, une portée tronconique de coincement 35, et qui sont soumises à des ressorts 36 les sollicitant en permanence en direction de cette portée tronconique 35.

Selon l'invention, le câble de traction 21 étant soumis à des moyens élastiques de précharge, ces moyens élastiques de précharge interviennent entre le support 14 et la pièce d'accouplement 26 et ils sollicitent cette pièce d'accouplement 26 en direction de la douille intermédiaire 28.
Ces moyens élastiques de précharge sollicitent la butée 11 au contact du dispositif 12 de manière décrite ci-après.

Ici, ces moyens élastiques de précharge sont constitués par un ressort de compression tronconique 37 et ils interviennent à la base de la partie tubulaire 24 du support 14, entre un épaulement interne 38 de ce support 14 et un épaulement 39 de la pièce d'accouplement 26. On notera que l'épaulement 38 est de réalisation aisée, par exemple par moulage.

Conjointement, les moyens de verrouillage débrayables 29 étant sus le contrôle d'un manchon 40 coaxial de la douille intermédiaire 28 et accessible de l'extérieur du support 14. Ce manchon 40 s'étend à l'extérieur de la douille 28, dans la partie tubulaire 24, en étant monté coulissant à frottement dans celle-ci, et, à son extrémité interne, il contourne la douille 28, en présentant, à l'intérieur de cette douille 28, un retour tubulaire 42 par lequel il est apte à intervenir sur les moyens de verrouillage 29.

Ce manchon 40 fait saillie hors de la partie tubulaire 24, et il présente, à l'extérieur de celle-ci, des moyens de préhension constitués, ici, par une collerette radiale 44.

Entre ce manchon 40 et le support 14 sont prévus par ailleurs des moyens de blocage 45.

Ici ces moyens de blocage 45 comportent une vis 46, qui, traversant, à la faveur d'un perçage 47, la partie tubulaire 24 du support 14, et, à la faveur d'un passage 48 allongé en boutonnière, le manchon 40, coopère en vissage avec une bague 50 disposée à l'intérieur de ce manchon 40.

C'est entre cette bague 50 et un épaulement 51 de la douille intermédiaire 28 qu'intervient le ressort 32.

En stockage (embout 31 non monté), le manchon 40 est retenu en position haute par la vis 46, par pincement, sous les effets de celle-ci, entre la bague 50 et la partie tubulaire 24, figure 2.

Le ressort 32, qui est alors comprimé, sollicite la douille 28 en direction de la pièce 26.

Retenues par le retour 42 du manchon 40, les billes 33 sont maintenues à l'écart de leur portée tronconique de coincement 35, ce qui permet un libre jeu de la pièce d'accouplement 26 vis-à-vis de cette douille intermédiaire 28.

Au montage, l'embout 31 est engagé dans la douille intermédiaire 28, et il y est assujetti par la goupille 30.

La vis 46 est alors desserrée, ce qui libère le manchon 40 et, par voie de conséquence, la douille intermédiaire 28.

Sous la sollicitation du ressort 32, choisi à cet effet suffisant pur vaincre le frottement entre le manchon 40 et la partie tubulaire 24, l'ensemble pénètre plus profondément dans cette dernière, jusqu'à absorption de l'inévitable jeu interne de la timonerie 27, figure 3, avec un engagement concommitant de la douille 28 sur la pièce 26 autorisé par le fait que, comme précédemment, et ainsi que l'illustre la figure 4, les billes 33 restent maintenues à distance de leur portée tronconique 35 par le retour 42, cependant que, sous la sollicitation du ressort 37, le câble 21 reste tendu.

Lorsque, en service, une traction est exercée par la timonerie 27 sur la douille 28, suivant la flèche F1 de la figure 3, il y a, dans un premier temps, un léger mouvement de dégagement, dans le même sens, de la douille 28 vis-à-vis de la pièce 26, cependant que, en raison du frottement entre lui et la partie tubulaire 24, le manchon 40 reste fixe, même si la vis 46 n'a pas été au préalable à nouveau serré, en sorte que, sous la sollicitation de leur ressort 36, les billes 33 des moyens de verrouillage débrayables 29 viennent au contact de leur portée tronconique de coincement 35.

Ces billes 33 formant dès lors coin entre la douille intermédiaire 28 et la pièce d'accouplement 26, cette dernière se trouve ensuite, dans un deuxième temps, entrainée par la douille intermédiaire 28, tel que schématisé par la flèche F1 sur la figure 5.

Il y a donc rotation de l'organe menant 18, déplacement axial, suivant la flèche F2 de la figure 1, de l'organe mené 17, actionnement, par l'organe de commande 17 du dispositif débrayeur 12, et, finalement, passage en configuration de dégagement de l'embrayage 13 qui normalement est engagé (garnitures de frottement du disque de friction de manière connue en soi, serrées entre le plateau de pression et de réaction de l'embrayage).

Lorsque la traction exercée par la timonerie 27 est relâchée, la douille intermédiaire 28 revient à sa position initiale, figures 3 et 4.

Les billes 33 des moyens de verrouillage débrayables 29 laissant alors un libre jeu axial entre la pièce 26 et la douille 28, ladite pièce 26, sous la sollicitation du ressort 37, pénètre plus profondément dans la douille intermédiaire 28, si, dans l'intervalle, les garnitures de frottement de l'embrayage 13, disposées en amont de ce ressort 37, ont été l'objet d'une usure.

Il y a ainsi systématiquement une compensation automatique de cette usure.

Conjointement, sous la sollicitation du ressort 37, le câble de traction 21 reste tendu, ce qui maintient l'organe de commande 11 au contact du dispositif débrayeur 12.

Pour une éventuelle déconnexion de la timonerie 27, il suffit de desserrer la vis 46 et de ramener en position haute le manchon 40 en le saisissant par sa collerette 44.

Bien entendu, la présente invention ne se limite pas à la forme de réalisation décrite.

En particulier, au lieu de billes, les moyens de verrouillage débrayables intervenant entre la pièce d'accouplement du câble de traction et la douille intermédiaire permettant son attelage à la timonerie assurant la commande de l'ensemble pourraient, comme dans la demande de brevet français n° 89.13932, mettre en oeuvre des cliquets.

On appreciera que la présente invention permet de modifier l'organe mené et menant. En effet, alors qu'à la figure 1, l'organe menant 18 s'étend au-delà du roulement 20, l'inverse devient possible, l'organe menant 118 (figure 6) comportant un manchon central sur lequel est monté l'organe mené 117 avec intervention des moyens de came à rampes hélicoïdales complémentaires 125. Dans ce cas, l'organe mené 117 présente un élément de manoeuvre en forme de L avec un manchon conformé pour porter extérieurement la butée 11 et pour présenter intérieurement les moyens de rampe 125 et un flasque doté d'une patte pour liaison avec la languette 19.

Le couvercle du support 14 est remplacé par un souflet 70. L'organe mené 117 est ainsi simplifié, ainsi que le montage de la butée 11, qui peut être réalisé comme le montage d'une butée classique. Dans ce cas, la butée est à autocentrage maintenue, comme décrit dans le document FR-A-2607885.

On notera qu'à la figure 6, l'organe mené 117 est en matière plastique à coefficient de frottement faible en sorte que la présence des billes 25 de la figure 1 n'est pas nécessaire et que la disposition est moins encombrante radialement, avec présence du souflet 70 évitant la pénétration d'impureté dans le support 14.

Tout ceci est rendu possible, car les moyens élastiques de précharge 37 interviennent entre le support 14 et la pièce d'accouplement 26.

Enfin, le ressort 37 peut être du type hélicoïdal, l'épaulement 38 étant alors prolongé.

## Revendications

1. Dispositif de commande pour embrayage, notamment pour véhicule automobile, du genre comportant, pour la manoeuvre d'un organe de commande (11) destiné à agir sur le dispositif débrayeur (12) de l'embrayage (13), un support (14), qui est destiné à être rapporté sur une partie fixe, un organe mené (17,117), qui est monté mobile en translation, et auquel est soumis ledit organe de commande (11), un organe menant (18,118), qui est monté mobile en rotation, et auquel est attelé circonférentiellement un câble de traction (21) muni d'une pièce d'accouplement (26) à son extrémité, avec, entre ledit organe mené (17,117) et ledit organe menant (18,118), des moyens de came à rampes hélicoïdales complémentaires (22,125), une douille intermédiaire (28), qui, à l'une de ses extrémités, est en engagement téléscopique avec la pièce d'accouplement (26), avec, entre elle et celle-ci, des moyens de verrouillage débrayables (29), et, qui, à l'autre de ses extrémités, est apte à être attelée à une timonerie de commande (27), et des moyens élastiques (32) qui, prenant appui sur le support (14), sollicitent ladite douille intermémdiaire (28) en direction de ladite pièce d'accouplement (26), caractérisé en ce que, le câble de traction (21) étant soumis à des moyens élastiques de précharge (37) tendant à le maintenir sous tension, lesdits moyens élastiques de précharge (37) interviennent entre le support (14) et la pièce d'accouplement (26) et sollicitent ladite pièce d'accouplement (26) en direction de ladite douille intermédidaire (28).

2. Dispositif de commande suivant la revendication 1, caractérisé en ce que les moyens élastiques de précharge (37) interviennent entre un épaulement (38) du support (14) et un épaulement (39) de la pièce d'accouplement (26).

3. Dispositif de commande suivant la revendication 1 ou 2, caractérisé en ce que les moyens élastiques de précharge (37) sont constitués par un ressort de compression.

4. Dispositif de commande suivant l'une quelconque des revendications 1 à 3, caractérisé en ce que, les moyens de verrouillage débrayables (29) intervenant entre la pièce d'accouplement (26) et la douille intermédiaire (28) étant sous le contrôle d'un manchon (40) coaxial de ladite douille intermédiaire (28) et accessible de l'extérieur du support (14), ledit manchon (40) s'étend à l'extérieur de la douille intermémdiaire (28), et il la contoune à son extrémité interne en présentant, à l'intérieur d'elle, un retour (42) par lequel il est apte à intervenir sur lesdits moyens de verrouillage débrayables (29).

5. Dispositif de commande suivant la revendication 4, caractérisé en ce que, entre ledit manchon (40) et le support (14) sont prévus des moyens de blocage (45).

6. Dispositif de commande suivant la revendication 5, caractérisé en ce que ledit manchon (40) est monté coulissant à frottement dans une partie tubulaire (24) du suport (14), et en ce que les moyens de blocage (45) qui lui sont associés comportent une vis (46) qui, traversant ladite partie tubulaire (24) et ledit manchon (40), coopère avec une bague (42) disposée à l'intérieur de celui-ci.

7. Dispositif de commande suivant l'une quelconque des revendications 1 à 6, caractérisé en ce que l'organe menant (118) comporte un manchon central sur lequel est monté l'organe mené (117) avec intervention des moyens de came à rampes hélicoïdales complémentaires (125).

## Patentansprüche

1. Bedienungsvorrichtung für eine Kupplung, insbesondere für ein Kraftfahrzeug, zur Betätigung eines Bedienungsorgans (11), welches dafür bestimmt ist, auf die Ausrückvorrichtung (12) der Kupplung (13) einzuwirken, enthaltend eine Stütze (14), die zur Anbringung an einem feststehenden Teil bestimmt ist, ein angetriebenes Organ (17, 117), welches translatorisch beweglich angebracht ist und dessen Einwirkung das genannte Bedienungsorgan (11) ausgesetzt ist, ein Antriebsorgan (18, 118), welches drehbeweglich angebracht ist und woran am Kreisumfang ein Zugkabel (21) angekoppelt ist, welches an seinem Ende mit einem Kopplungsstück (26) versehen ist, wobei zwischen dem genannten angetriebenen Organ (17, 117) und dem genannten Antriebsorgan (18, 118) Nockenmittel mit dazu passenden spiralförmigen Rampen (22, 125) vorgesehen sind, eine Zwischenhülse (28), die an einem Ende teleskopisch mit dem Kopplungsstück (26) in Eingriff steht, während dazwischen ausrückbare Verriegelungsmittel (29) angebracht sind, und die am anderen Ende an ein Betätigungsgestänge (27) angekoppelt werden kann, sowie elastische Mittel (32), die auf der Stütze (14) aufliegen und die genannte Zwischenhülse (28) in Richtung des genannten Kopplungsstücks (26) beanspruchen, **dadurch gekennzeichnet,** daß, da das Zugkabel (21) der Einwirkung der elastischen Vorspannmittel (37) ausgesetzt ist, wodurch es unter Spannung gehalten wird, die genannten elastischen Vorspannmittel (37) zwischen der Stütze (14) und dem Kopplungsstück (26) wirksam werden und das genannte Kopplungsstück (26) in Richtung der genannten Zwischenhülse (28) beanspruchen.

2. Bedienungsvorrichtung nach Anspruch 1, **dadurch gekennzeichnet,** daß die elastischen Vorspannmittel (37) zwischen einer Schulter (38) der Stütze (14) und einer Schulter (39) des Kopplungsstücks (26) wirksam werden.

3. Bedienungsvorrichtung nach Anspruch 1 oder 2, **dadurch gekennzeichnet,** daß die elastischen Vorspannmittel (37) aus einer Druckfeder bestehen.

4. Bedienungsvorrichtung nach einem der Ansprüche 1 bis 3, **dadurch gekennzeichnet,** daß, da die ausrückbaren Verriegelungsmittel (29) zwischen dem Kopplungsstück (26) und der Zwischenhülse (28) wirksam werden, die von einer koaxialen Muffe (40) der genannten Zwischenhülse (28), die von außerhalb der Stütze (14) zugänglich ist, kontrolliert wird, die genannte Muffe (40) sich nach außerhalb der Zwischenhülse (28) erstreckt und die Muffe sie am inneren Ende dadurch umgeht, daß innen ein Rücksprung (42) vorgesehen ist, wodurch sie auf die genannten ausrückbaren Verriegelungsmittel (29) einwirken kann.

5. Bedienungsvorrichtung nach Anspruch 4, **dadurch gekennzeichnet,** daß zwischen der genannten Muffe (40) und der Stütze (14) Blockiermittel (45) vorgesehen sind.

6. Bedienungsvorrichtung nach Anspruch 5, **dadurch gekennzeichnet,** daß die genannte Muffe (40) reibschlüssig gleitend in einem rohrförmigen Teil (24) der Stütze (14) eingebaut ist und daß die damit verbundenen Blockiermittel (45) eine Schraube (46) aufweisen, die, indem sie durch den genannten rohrförmigen Teil (24) und die genannte Muffe (40) hindurchtritt, mit einem in der Muffe angeordneten Ring (42) zusammenwirkt.

7. Bedienungsvorrichtung nach einem der Ansprüche 1 bis 6, **dadurch gekennzeichnet,** daß das Antriebsorgan (118) eine zentrale Muffe aufweist, woran das angetriebene Organ (117) unter Einschaltung der Nockenmittel mit dazu passenden Spiralrampen (125) angebaut ist.

## Claims

1. A clutch control device, especially for a motor vehicle, of the kind comprising, for actuation of a control member (11) adapted to act on the declutching device (12) of the clutch (13), a support (14) which is arranged to be carried on a fixed part, a driven member (17, 117) which is mounted for translational movement, and with which the said control member (11) engages, a driving member (18, 118) which is mounted for rotational movement, and to which there is circumferentially connected a traction cable (21) which is provided with a coupling piece (26) at its end, with, between the said driven member (17, 117) and the said driving member (18, 118), camming means having complementary helical ramps (22, 125), an intermediate sleeve member (28) which is in telescopic engagement at one of its ends with the coupling piece (26), with disengageable locking means (29) between it and the latter, and which is adapted to be connected at its other end with a control linkage (27), together with resilient means (32) which, engaging on the support (14), urge the said intermediate sleeve member (28) towards the said coupling piece (26), characterised in that, the traction cable (21) being subjected to preloading resilient means (37) tending to maintain it under tension, the said preloading resilient means (37) act between the support (14) and the coupling piece (26) and urge the said coupling piece (26) towards the said intermediate sleeve member (28).

2. A control device according to Claim 1, characterised in that the preloading resilient means (37) act between a shoulder (38) of the support (14) and a shoulder (39) of the coupling piece (26).

3. A control device according to Claim 1 or Claim 2, characterised in that the preloading resilient means (37) comprise a compression spring.

4. A control device according to any one of Claims 1 to 3, characterised in that, the disengageable locking means (29) interposed between the coupling piece (26) and the intermediate sleeve member (28) being under the control of a sleeve (40) which is coaxial with the said intermediate sleeve member (28) and accessible from outside the support (14), the said sleeve (40) extends outside the intermediate sleeve member (28) and encloses it at the inner end of the latter by means of a flange (42) of the sleeve within the sleeve member, whereby the sleeve is adapted to act on the said disengageable locking means (29).

5. A control device according to Claim 4, characterised in that stop means (45) are provided between the said sleeve (40) and the support (14).

6. A control device according to Claim 5, characterised in that the said sleeve (40) is mounted for frictional sliding movement in a tubular portion (24) of the support (14), and in that the stop means (45) associated with it comprise a screw (46) which, passing through the said tubular portion (24) and the said sleeve (40), cooperates with a ring (42) disposed inside the latter.

7. A control device according to any one of Claims 1 to 6, characterised in that the driving member (118) includes a central sleeve on which the driving member (117) is mounted, with camming means having complementary helical ramps (125) being interposed.
